# EUROPÄISCHE PATENTSCHRIFT

(11) **EP 1 275 430 B1**
(45) Veröffentlichungstag und Bekanntmachung des Hinweises auf die Patenterteilung: **26.04.2006**
(21) Anmeldenummer: 02011888.1
(22) Anmeldetag: 29.05.2002
(51) Int. Cl.: B01D 53/06

(54) **Verfahren und Vorrichtung zur Reinigung von Verbrennungsabgasen**
Process and Apparatus for cleaning combustion exhaust gases
Procédé et appareil pour purifier des gaz de combustion

(30) Priorität: 12.07.2001 DE 10133991
(43) Veröffentlichungstag der Anmeldung: 15.01.2003
(73) Patentinhaber: MG Technologies AG, 60325 Frankfurt am Main (DE)
(72) Erfinder: Herden, Hansjörg, 63110 Rodgau (DE); Roth, Barbara, 1120 Brüssel (BE); Mergler, Robert, 65760 Eschborn (DE); Stegemann, Berthold, 65760 Eschborn (DE); Sauer, Harald, 60433 Frankfurt/Main (DE)
(74) Vertreter: Stenger, Watzke & Ring

(56) Entgegenhaltungen:
- EP-A- 0 479 350
- EP-A- 0 686 810
- EP-A- 1 020 419
- DE-A- 4 100 645
- DE-A- 4 403 244
- DE-A- 4 415 719
- DE-C- 19 856 260
- US-A- 4 889 698

## Beschreibung

Die Erfindung betrifft ein Verfahren zur Abtrennung von Staub, HF, HCl, SO₂, SO₃, Schwermetallen, Schwermetallverbindungen, polyhalogenierten Kohlenwasserstoffen und polyzyklischen Kohlenwasserstoffen aus Verbrennungsabgasen durch Behandlung der schadstoffhaltigen Verbrennungsabgase mit einem Sorptionsmittel in einer zirkulierenden Wirbelschicht, die aus einem Reaktor, einem Abscheider und einer Rückführleitung besteht, wobei die Schadstoffe im Reaktor von dem im Gasstrom suspendierten Sorptionsmittel gebunden werden, das mit den Schadstoffen beladene Sorptionsmittel im Abscheider aus der Gas-Feststoff-Suspension abgeschieden und teilweise über die Rückführleitung in den Reaktor zurückgeführt sowie teilweise ausgetragen wird. Die Erfindung betrifft ferner eine Vorrichtung zur Durchführung des Verfahrens. Die Erfindung betrifft schließlich eine bevorzugte Verwendung des Verfahrens und der Vorrichtung.

Bei der Verbrennung fossiler Brennstoffe, die mit dem Ziel der Energiegewinnung durchgeführt wird, und bei der Verbrennung von Müll, Klärschlamm und Industrieabfällen, die mit dem Ziel der Abfallbeseitigung und Energiegewinnung durchgeführt wird, entstehen Abgase, die durch Staub, HF, HCl, SO₂, SO₃, Schwermetalle, Schwermetallverbindungen, polyhalogenierte Kohlenwasserstoffe und polyzyklische Kohlenwasserstoffe verunreinigt sind, wobei die Verunreinigungen in Abhängigkeit vom jeweiligen Verbrennungsprozess in unterschiedlichen Mengen im Abgas vorliegen und wobei die Konzentration der Verunreinigungen im Verlauf jedes Verbrennungsprozesses gewissen Schwankungen unterliegt. Beispielsweise sind wegen der unterschiedlichen und wechselnden Zusammensetzung von Müll, Industrieabfällen und Klärschlamm auch die bei der Verbrennung dieser Abfälle entstehenden Abgase mit unterschiedlichen Mengen umweltbelastender Substanzen verunreinigt. Alle Verunreinigungen müssen aber weitgehend aus den Abgasen entfernt werden, bevor diese in die Atmosphäre entlassen werden können, denn sehr viele Verunreinigungen entfalten bereits in geringer Konzentration toxische Wirkungen gegenüber Menschen, Tieren und Pflanzen.

Der Staub, der in den Verbrennungsabgasen in einer Menge bis zu 50 000 mg/Nm³ vorliegt, wird in Zyklonen, Elektrofiltern, Gewebefiltern oder Wäschern abgeschieden, wobei das zu entstaubende Abgas auch mehrere dieser Apparate durchlaufen kann. Die bekannten Entstaubungsverfahren lassen heute auch im großtechnischen Maßstab Reststaubgehalte von < 5mg/Nm³ zu. Eine möglichst weitgehende Entstaubung ist deshalb erforderlich, weil der Staub vor allem toxisch wirkende Schwermetalle, Schwermetallverbindungen, polyhalogenierte Dibenzodioxine und Dibenzofurane sowie polyzyklische Kohlenwasserstoffe adsorbiert.

SO₂ und HCl liegen in den Verbrennungsabgasen in einer Menge von jeweils bis zu 7000 mg/Nm³ vor; außerdem sind HF und SO₃ jeweils in Mengen bis zu 100 mg/Nm³ vorhanden. Diese gasförmigen Verbindungen bilden mit dem in der Atmosphäre enthaltenen Wasserdampf Säuren, die sehr häufig als Aerosole vorliegen und eine toxische Wirkung haben. Sie werden daher weitgehend abgetrennt, wobei mit den bekannten Reinigungsverfahren im technischen Maßstab SO₂-Restgehalte < 20 mg/Nm³, HCl-Restgehalte < 5mg/Nm³ und HF- sowie SO₃-Restgehalte < 1mg/Nm³ verwirklicht werden können. Zur Abtrennung von SO₂, HCl, HF und SO₃ werden trocken, quasi-trocken und nass arbeitende Reinigungsverfahren eingesetzt, wobei auch mehrere Verfahren hintereinander geschaltet werden können. Bei diesen Verfahren wird als Reaktionsmittel vor allem Ca (OH)₂, CaO, CaCO₃,NaOH und Na₂CO₃ verwendet, wobei diese Verbindungen unter Salzbildung mit den gasförmigen, sauren Schadstoffen reagieren. Besondere Bedeutung hat die Sprühabsorption erlangt, bei der eine wässrige Suspension von Ca (OH)₂ mit den sauren Schadstoffen SO₂, SO₃, HCl und HF reagiert, das Wasser verdampft und ein festes Reaktionsprodukt anfällt, das auch Staub und andere Schadstoffe enthält. Daneben sind Waschverfahren bekannt, die eine sehr weitgehende Abscheidung der vorgenannten sauren Schadstoffe zulassen.

Die Schwermetalle und die Schwermetallverbindungen, insbesondere Quecksilber, Kadmium und Arsen sowie deren Verbindungen, und die polyhalogenierten sowie polyzyklischen Kohlenwasserstoffe liegen in den Abgasen in geringerer Konzentration vor. Diese Substanzen wirken allerdings extrem toxisch und müssen daher nahezu quantitativ aus den Abgasen entfernt werden, was nach dem Stand der Technik vorzugsweise durch Adsorptions- und/oder Waschverfahren erfolgt. Als Adsorptionsmittel haben sich insbesondere Aktivkohle und Zeolithe bewährt, während die Waschverfahren sowohl im sauren als auch im alkalischen Bereich arbeiten. Die polyhalogenierten Kohlenwasserstoffe können auch durch katalytische Zersetzung aus den Abgasen entfernt werden, während die polyzyklischen Kohlenwasserstoffe auch durch Reaktion mit dem im Verbrennungsabgas enthaltenen Sauerstoff an einem Oxidationskatalysator zu Wasser und Kohlendioxid oxidiert werden können. Bei den polyhalogenierten Kohlenwasserstoffen, die in Verbrennungsabgasen enthalten sind, handelt es sich um polyhalogenierte Dibenzodioxine und Dibenzofurane, polychlorierte Biphenyle, polychlorierte Phenole und polychlorierte Aromaten, die alle außerordentlich toxisch sind.

Neben den vorgenannten Schadstoffen, deren Abtrennung Gegenstand der Erfindung ist, enthalten die Verbrennungsabgase noch die Oxide des Stickstoffs, also N₂O, NO und NO₂, die ebenfalls toxisch wirken. Auch diese Schadstoffe müssen aus den Verbrennungsabgasen entfernt werden, was nach dem Stand der Technik insbesondere durch eine Umsetzung mit NH₃ erfolgt, wobei diese Umsetzung entweder bei hohen Temperaturen oder bei niedrigeren Temperaturen an einem Katalysator unter Bildung von N₂ und H₂O abläuft.

Die Verbrennungsabgase selbst bestehen aus N₂, CO₂, H₂O und O₂. Die Quelle des Stickstoffs ist zum überwiegenden Teil der Stickstoffgehalt der Verbrennungsluft, während der in den Verbrennungsabgasen in einer Menge von 2 bis 12 Vol.-% enthaltene Sauerstoff daraus resultiert, dass die Verbrennung mit einem stöchiometrischen Sauerstoffüberschuss durchgeführt wird. CO₂ und H₂O bilden sich bei der Verbrennung des in den Brennstoffen enthaltenen Kohlenstoffs bzw. Wasserstoffs mit dem in der Verbrennungsluft enthaltenen Sauerstoff.

Die technische Anwendbarkeit der bekannten Abgasreinigungsverfahren hängt insbesondere davon ab, dass sie möglichst geringe Investitions- und Betriebskosten verursachen und dass sie Verfahrensprodukte liefern, die in möglichst geringer Menge anfallen sowie entweder ohne größere Schwierigkeiten deponiert oder nach einer Regeneration in die Reinigungsprozesse zurückgeführt werden können. Um einen möglichst großen Abscheidegrad für die einzelnen vorgenannten Verunreinigungen zu erzielen, ist es üblich, dass mehrere Reinigungsverfahren miteinander kombiniert werden. Beispielsweise kann ein Entstaubungsverfahren mit einem Verfahren zur quasitrockenen Abscheidung von gasförmigen sauren Schadstoffen (Sprühabsorption) verknüpft werden, dem dann noch ein Adsorptionsverfahren zur Abtrennung von Schwermetallen und Kohlenwasserstoffen sowie ein Entstickungsverfahren nachgeschaltet werden kann. Die vorliegende Erfindung hat es sich allerdings zum Ziel gesetzt, möglichst viele der vorgenannten Schadstoffe in einem Reaktionsschritt nahezu quantitativ aus den Verbrennungsabgasen zu entfernen, denn nur so ist es möglich, die Investitions- und Betriebskosten für die Reinigung von Verbrennungsabgasen zu minimieren. Aus dem Stand der Technik sind bereits Abgasreinigungsverfahren bekannt, die dieses Ziel mit mehr oder weniger gutem Erfolg verfolgen.

So ist beispielsweise aus der EP-B 0 253 563 ein Verfahren zur Beseitigung von Quecksilberdampf und dampfförmigen organischen Verbindungen sowie sauren Bestandteilen aus einem von einer Verbrennungsanlage abgehenden heißen Abgasstrom bekannt, der außerdem Flugasche enthält. Bei diesem bekannten Verfahren wird der zu reinigende Abgasstrom bei einer Temperatur von 135 bis 400 °C in eine Zerstäubungs-Absorptionskammer geleitet, in der eine wässrige Flüssigkeit zerstäubt wird, die ein basisches Absorptionsmittel enthält. Das Abgas kühlt sich im Sprühabsorber durch Verdampfung des Wassers auf 180 bis 90 °C ab, und gleichzeitig werden die sauren Bestandteile SO₂ und HCl aus dem Abgas gebunden, wobei ein partikelförmiges Material gebildet wird, das die Reaktionsprodukte zwischen dem basischen Absorptionsmittel und den sauren Bestandteilen des Abgases sowie nicht umgesetztes Absorptionsmittel enthält. Das partikelförmige Reaktionsprodukt wird zusammen mit eventuell vorhandener Flugasche in einem Partikelabscheider stromabwärts zur Zerstäubungs-Absorptionskammer von den Abgasen getrennt. Beim bekannten Verfahren ist außerdem vorgesehen, dass pulverförmiger aktiver Kohlenstoff in einer Menge von 1 bis 800 mg/Nm³ Abgas zumindest an einer Stelle, die stromaufwärts der Zerstäubungs-Absorptionskammer, in der Zerstäubungs-Absorptionskammer oder stromabwärts zur Zerstäubungs-Absorptionskammer aber stromaufwärts zum Partikelabscheider liegt, in den Abgasstrom eingebracht wird. Der pulverförmige aktive Kohlenstoff wird zusammen mit den partikelförmigen Reaktionsprodukten im Partikelabscheider abgetrennt. Dieses bekannte Verfahren hat aus heutiger Sicht insbesondere den Nachteil, dass es zur Abscheidung der Schadstoffe sowohl mit einem Sprühabsorber als auch mit einem Flugstromreaktor arbeitet, also mit zwei Verfahrensstufen.

Aus der DE-A 4415719 ist ein Verfahren zur Abtrennung von HF, HCl, SO₂, polyhalogenierten Kohlenwasserstoffen, Quecksilber, Quecksilberverbindungen und Staub aus einem Abgas bekannt, bei dem das verunreinigte Abgas bei einer Temperatur von 70 bis 180 °C oberhalb des Taupunkts in einem Reaktor mit einem Adsorptionsmittel in Kontakt gebracht wird, die Gas-Feststoff-Suspension anschließend in einen Vorabscheider geführt wird, in dem die Abscheidung des größten Teils der Feststoffe erfolgt, die vorgereinigte Gas-Feststoff-Suspension danach in einen Endabscheider geführt wird, in den die gesamte Menge des Adsorptionsmittels eingebracht und in dem die suspendierten Feststoffe nahezu quantitativ abgetrennt werden, die im Endabscheider anfallenden Feststoffe in den Reaktor zurückgeführt werden und ein Teilstrom der im Vorabscheider anfallenden Feststoffe in den Reaktor zurückgeführt wird, währen ein zweiter Teilstrom der im Vorabscheider anfallenden Feststoffe ausgeschleust und deponiert wird. Bei diesem Verfahren wird das Abgas vor dem Eintritt in den Reaktor oder im Reaktor durch Mischen mit Wasser auf eine Temperatur von 70 bis 180 °C abgekühlt, wobei der Reaktor als Wirbelschichtreaktor, Flugstromreaktor oder Sprühabsorber gestaltet ist. Das Adsorptionsmittel besteht aus Ca (OH)₂ und/oder CaO und hat einen mittleren Teilchendurchmesser d₅₀ von 5 bis 500 µm. Das Adsorptionsmittel kann 2 bis 20 Gew.-% Aktivkohle und/oder Zeolithe enthalten. Dieses bekannte Verfahren hat aus heutiger Sicht den Nachteil, dass zu seiner Durchführung zur Abscheidung der mit Schadstoffen beladenen Feststoffe ein Vorabscheider und ein Endabscheider benötigt werden, wobei noch hinzukommt, dass die Abscheidung der Feststoffe aus dem Gasstrom dann besonders schwierig ist, wenn sie einen größeren Gehalt an Ca Cl₂ aufweisen, da diese Verbindung hygroskopisch ist und deshalb in den Abscheidern zu Feststoff-Verkrustungen führt, denn im Abgasstrom ist ausreichend Wasser enthalten, welches vom Ca Cl₂ angelagert wird.

Aus der DE-A 4403244 ist ein Verfahren zur Reinigung von sauerstoffhaltigen, bei der Verbrennung von Müll, Industrieabfällen und Klärschlamm anfallenden Abgasen bekannt, bei dem Quecksilber, Quecksilberverbindungen und polyhalogenierte Kohlenwasserstoffe durch Adsorption an Zeolithen aus den Abgasen entfernt werden. Dieses Verfahren ist dadurch gekennzeichnet, dass die Abgase oberhalb des Taupunkts bei einer Temperatur von 80 bis 180 °C und einer Gasgeschwindigkeit von 3 bis 20 m/s mit einer Mischung aus natürlich vorkommenden Zeolithen während einer Reaktionszeit von 0,5 bis 10 Sekunden in einer Gas-Feststoff-Suspension zur Reaktion gebracht werden, wobei die mittlere Teilchengröße d₅₀ der Zeolith-Mischung 5 bis 50 µm und die mittlere Suspensionsdichte der Gas-Feststoff-Suspension 0,02 bis 10 kg Feststoff/Nm³ Abgas beträgt. Die Mischung aus natürlich vorkommenden Zeolithen kann 10 bis 30 Gew.-% Ca CO₃, CaO und/oder Ca (OH)₂ enthalten. Dieses bekannte Verfahren kann in der zirkulierenden Wirbelschicht durchgeführt werden, wobei die Gasgeschwindigkeit 3 bis 8 m/s und die mittlere Suspensionsdichte der Gas-Feststoff-Suspension 2 bis 10 kg Feststoff/Nm³ Abgas beträgt. Dieses Verfahren hat insbesondere den Nachteil, dass es die sauren Schadstoffe HF, HCl, SO₂ und SO₃ nicht weitgehend entfernen kann, und dass insoweit eine weitere Verfahrensstufe unbedingt erforderlich ist. Dies hat zur Folge, dass das Verbrennungsabgas zunächst in einer geeigneten Vorrichtung entstaubt und dann in einem Sprühabsorber von den sauren gasförmigen Schadstoffen weitgehend befreit werden muss, bevor die Abtrennung der Schwermetalle und der polyhalogenierten Kohlenwasserstoffe sowie der restlichen sauren Schadstoffe erfolgen kann.

Der Erfindung liegt die Aufgabe zu Grunde, ein Verfahren zur Abtrennung von Staub, HF, HCl, SO₂, SO₃, Schwermetallen, Schwermetallverbindungen, polyhalogenierten Kohlenwasserstoffen und polyzyklischen Kohlenwasserstoffen aus Verbrennungsabgasen zu schaffen, das die Schadstoffabtrennung nur in einer Verfahrensstufe bewirkt, das ferner ein gereinigtes Abgas erzeugt, welches die von der 17. Verordnung zur Durchführung des Bundes-Immissionsschutzgesetztes (Verordnung über Verbrennungsanlagen für Abfälle und ähnliche brennbare Stoffe - 17. BImSchV) vom 23.11.1990, geändert durch die Verordnung vom 23.02.1999, vorgegebenen Grenzwerte nicht überschreitet und das schließlich ein mit Schadstoffen beladenes Feststoffgemisch erzeugt, welches riesel- und transportfähig bleibt und weder im Feststoffabscheider noch in den Transportsystemen zu Verkrustungen und Anbackungen führt. Der Erfindung liegt ferner die Aufgabe zu Grunde, eine Vorrichtung zur Durchführung des Verfahrens zu schaffen sowie eine bevorzugte Verwendung für das Verfahren und die Vorrichtung anzugeben.

Die der Erfindung zu Grunde liegende Aufgabe wird durch ein Verfahren der eingangs genannten Art gelöst, das dadurch gekennzeichnet ist, dass als Sorptionsmittel ein Gemisch aus Ca(OH)₂, mindestens einem natürlich vorkommenden Zeolith und einer kohlenstoffhaltigen Substanz verwendet wird, wobei die mittlere Teilchengröße d₅₀ des Sorptionsmittels 2 bis 50 µm beträgt, dass die Behandlung der schadstoffhaltigen Verbrennungsabgase mit dem Sorptionsmittel bei 120 bis 180 °C in Anwesenheit von Wasser / Wasserdampf erfolgt, dass der Reaktor mit einer Gasgeschwindigkeit von 2 bis 10 m/s, einer mittleren Verweilzeit der Feststoffteilchen bei einmaligem Durchgang von 1 bis 10 Sekunden und einer Feststoff-Umlaufrate von 10 bis 100 betrieben wird, wobei die im Reaktor vorhandene Gas-Feststoff-Suspension eine mittlere Suspensionsdichte von 1 bis 10 kg Feststoff/Nm³ Abgas hat, und dass die Abtrennung des beladenen Sorptionsmittels im Abscheider durch Filtration erfolgt.

Das im Sorptionsmittel enthaltene Ca(OH)₂ hat eine Reinheit > 98 % und reagiert mit den bzw. absorbiert die sauren Schadstoffe HF, HCl, SO₂ und SO₃ unter Bildung der entsprechenden Calciumsalze. Die Salzbildung verläuft relativ schnell, denn das in flüssiger Form in den Reaktor eingetragene Wasser benetzt zunächst die Sorptionsmittel-Teilchen und verdampft erst danach, wobei die Ca(OH)₂-Teilchen durch das Benetzen mit flüssigem Wasser bezüglich ihrer Reaktivität aktiviert werden. Deshalb benutzt die Erfindung ausdrücklich den Begriff "Wasser / Wasserdampf". Die natürlich vorkommenden Zeolithe und die kohlenstoffhaltige Substanz adsorbieren die in den Verbrennungsabgasen enthaltenen Schwermetalle und Schwermetallverbindungen sowie die polyhalogenierten und polyzyklischen Kohlenwasserstoffe. Allerdings erfüllen die im Sorptionsmittel enthaltenen natürlichen Zeolithe noch eine weitere Aufgabe, die darin besteht, dass sie bei 120 bis 180 °C Wasser adsorbieren, denn ihr Aufnahmevermögen für Wasser beträgt bei 20 °C 30 bis 50 g/kg, während sie bei 220 bis 230 °C kein Wasser mehr aufnehmen können, so dass ihr Aufnahmevermögen für Wasser bei 120 bis 180 °C durchaus noch beachtlich ist. Die Adsorptionsvorgänge laufen wesentlich langsamer ab, als die Salzbildungsreaktionen. Dies hat zur Folge, dass die natürlich vorkommenden Zeolithe der Gas-Feststoff-Suspension insbesondere im oberen Teil des Reaktors Wasser entziehen, wodurch in sehr vorteilhafter Weise bewirkt wird, dass sich das Wasser nicht mehr an das hygroskopische CaCl₂ anlagert und dass die den Reaktor verlassenden Feststoffe insbesondere im Abscheider nicht anbacken und nicht verklumpen; sie bleiben vielmehr riesel- und fließfähig. Durch die erfindungsgemäße Feststoff-Umlaufrate von 10 bis 100 - die einzelnen Feststoffteilchen durchlaufen den Reaktor also 10 bis 100 mal - ist sichergestellt, dass sich im Reaktor immer eine große Sorptionsmittelmenge befindet, so dass das Sorptionsmittel gegenüber den Schadstoffen im Überschuss vorliegt. Hierdurch wird erreicht, dass 85 bis 99 % des eingesetzten Ca(OH)₂ mit den gasförmigen, sauren Schadstoffen reagieren und dass die Adsorptionskapazität der natürlich vorkommenden Zeolithe sowie der kohlenstoff haltigen Substanz zum weitaus überwiegenden Teil ausgenutzt wird. Die gute Riesel- und Fließfähigkeit der Feststoffteilchen ermöglicht es, dass sie im Abscheider allein durch Filtration aus der Gas-Feststoff-Suspension abgeschieden werden können und dass insbesondere ihre teilweise Rückführung in den Reaktor problemlos möglich ist. Durch die erfindungsgemäße Reinigung der Verbrennungsabgase in einer zirkulierenden Wirbelschicht können die von der 17. BimSchV vorgegebenen Schadstoff-Grenzwerte problemlos eingehalten und zum überwiegenden Teil sogar unterschritten werden. Der Vorteil des erfindungsgemäßen Verfahrens liegt also insbesondere darin, dass alle vorgenannten Schadstoffe in einem Verfahrensschritt nahezu vollständig abgetrennt werden können, und zwar mit einem minimalen apparativen Aufwand.

In besonders vorteilhafter Weise kommt noch hinzu, dass das abgeschiedene Sorptionsmittel kein CaSO₃ enthält, denn dieses ursprünglich entstehende Reaktionsprodukt wird durch den im Verbrennungsabgas enthaltenen Sauerstoff auf Grund der katalytischen Wirkung der anwesenden Schwermetalle quantitativ zu CaSO₄ oxidiert; im ausgetragenen Sorptionsmittel konnte kein SO₃²⁻ nachgewiesen werden. Im ausgetragenen Sorptionsmittel liegen die Schadstoffe SO₂ und SO₃ also als Sulfate des Calciums vor, wobei die Calciumsulfate zum überwiegenden Teil aus CaSO₄ • 0,5 H₂O bestehen. Dieses Halbhydrat des CaSO₄ verfestigt sich beim Kontakt mit Wasser unter Bildung von CaSO₄ • 2H₂O. Daher wird der im ausgetragenen Sorptionsmittel enthaltene Staub fest eingebunden, wenn das ausgetragene Sorpitonsmittel mit Wasser in Berührung kommt, z.B. auf einer Deponie.

Die zirkulierende Wirbelschicht ist als Zirkulationssystem gestaltet und zeichnet sich dadurch aus, dass - im Unterschied zur klassischen Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und darüber befindlichem Gasraum ist bei einer expandierten zirkulierenden Wirbelschicht nicht existent; jedoch nimmt innerhalb des Reaktors die Feststoffkonzentration von unten nach oben ständig ab. Dies hat zur Folge, dass im gesamten Raum des Reaktors Absorptions- und Adsorptionsvorgänge ablaufen können, denn auch im oberen Teil des Reaktors befinden sich immer ausreichend viele Teilchen des Sorptionsmittels. Es wurde gefunden, dass die "lungengängigen" Staubteilchen - also kleine Staubteilchen mit einem mittleren Teilchendurchmesser d₅₀ < 1µm - in der zirkulierenden Wirbelschicht von den größeren Teilchen des Sorptionsmittels durch die Wirkung van der Waalscher Kräfte weitgehend adsorbiert werden. Diese Adsorbate werden durch die in der zirkulierenden Wirbelschicht herrschenden Scherkräfte in vorteilhafter Weise nicht zerstört, während größere Feststoff-Agglomerate durch die Scherkräfte der zirkulierenden Wirbelschicht in die einzelnen Feststoffteilchen zerlegt werden, was sich ebenfalls vorteilhaft auf den Verfahrensablauf auswirkt.

Nach der Erfindung ist es besonders vorteilhaft, wenn das Sorptionsmittel aus 75 bis 96 Gewichtsteilen Ca(OH)₂ mit einem mittleren Teilchendurchmesser d₅₀ von 2 bis 5 µm, 3 bis 15 Gewichtsteilen einer kohlenstoffhaltigen Substanz mit einem mittleren Teilchendurchmesser d₅₀ von 10 bis 30 µm und 1 bis 10 Gewichtsteilen mindestens eines natürlich vorkommenden Zeoliths mit einem mittleren Teilchendurchmesser d₅₀ von 10 bis 25 µm besteht. Eine derartige Beschaffenheit des Sorptionsmittels bewirkt eine optimale Schadstoffabtrennung und gewährleistet einen störungsfreien, kontinuierlichen Betrieb der zirkulierenden Wirbelschicht.

Gemäß der Erfindung wird als natürlich vorkommender Zeolith Analcim, Chabasit, Klinoptilolith, Faujasit, Harmotom, Mordenit oder Natrolith vorteilhaft verwendet, wobei auch ein aus zwei oder mehreren dieser Stoffe bestehendes Gemisch zum Einsatz kommen kann. Als kohlenstoffhaltige Substanz wird erfindungsgemäß Herdofenkoks oder Aktivkohle vorteilhaft verwendet, wobei der Herdofenkoks einerseits preiswert ist und andererseits ein ausreichend hohes Adsorptionsvermögen für Schwermetalle, Schwermetallverbindungen und toxische Kohlenwasserstoffe hat.

In weiterer Ausgestaltung der Erfindung ist vorgesehen, dass der natürlich vorkommende Zeolith und/oder die kohlenstoffhaltige Substanz mit 2 bis 10 Gew.-% Schwefel und/oder mindestens einer schwefelhaltigen Verbindung dotiert sind. Die Dotierung erfolgt in der Weise, dass der natürlich vorkommende Zeolith und/oder die kohlenstoffhaltige Substanz mit Schwefel oder mindestens einer schwefelhaltigen Verbindung gemischt werden, wobei alle Stoffe etwa die gleichen Teilchendurchmesser haben, oder dass der natürlich vorkommende Zeolith und/oder die kohlenstoffhaltige Substanz mit einer Lösung imprägniert werden, die mindestens eine schwefelhaltige Verbindung enthält, und dass die so imprägnierten Feststoffe anschließend getrocknet werden. Als schwefelhaltige Verbindungen werden Polysulfide des Natriums, Kaliums, oder Calciums, Dithiocarbamate, Trithiocarbonate oder das Natriumsalz des Trimercapto-S-Triazin verwendet. Der Schwefel und die schwefelhaltigen Verbindungen reagieren in der Wärme mit den im Verbrennungsabgas enthaltenen Schwermetallen unter Bildung von Sulfiden.

Entsprechend der Erfindung wird das rückgeführte, mit Schadstoffen beladene Sorptionsmittel in die schadstoffhaltigen Verbrennungsabgase vor dem Reaktor eingetragen, also in den Abgaskanal, der in den Reaktor mündet. Entsprechend der Erfindung wird das mit Schadstoffen beladene, ausgetragene Sorptionsmittel durch frisches Sorptionsmittel ersetzt, wobei das frische Sorptionsmittel in die schadstoffhaltigen Verbrennungsabgase vor dem Reaktor - also in den Abgaskanal - eingetragen wird und wobei das frische Sorptionsmittel sowie das rückgeführte Sorptionsmittel getrennt voneinander in die schadstoffhaltigen Verbrennungsabgase eingebracht werden.

Durch beide Maßnahmen wird in vorteilhafter Weise eine innige Vermischung des frischen und des rückgeführten beladenen Sorptionsmittels bereits vor dem Eintritt in den Reaktor erreicht. Es hat sich gezeigt, dass durch die getrennte Zufuhr des frischen und des rückgeführten Sorptionsmittels in das schadstoffhaltige Verbrennungsabgas vor dem Reaktor eine unerwünschte Agglomeration der Feststoffe vermieden werden kann, die dann eintritt, wenn frisches und rückgeführtes Sorptionsmittel gemeinsam in das Verbrennungsabgas eingetragen und bereits vor ihrem Eintrag vermischt werden. Es hat sich ferner gezeigt, dass alle Feststoffteilchen im Strom des schadstoffhaltigen Verbrennungsabgases vor ihrem Eintritt in den Reaktor auf eine Temperatur aufgeheizt werden, die oberhalb der im Reaktor herrschenden Arbeitstemperatur liegt, was dazu führt, dass die Feststoffagglomeration behindert und die rückgeführten Zeolith-Teilchen getrocknet werden, so dass sie im Reaktor erneut Wasser aufnehmen können. Schließlich hat sich gezeigt, dass bereits im Verbrennungsabgas vor dem Reaktor eine gut vermischte Gas-Feststoff-Suspension erzeugt wird, die dann im Reaktor selbst eine sehr gleichmäßige Feststoffverteilung über den gesamten Reaktorquerschnitt bewirkt.

In weiterer Ausgestaltung der Erfindung ist vorgesehen, dass die Menge des zugeführten frischen Sorptionsmittels entsprechend der Summe der Schadstoffe HCl und SO₂ und der zu ihrer Bindung stöchiometrisch erforderlichen Menge an Ca(OH)₂ geregelt wird. Diese erfindungsgemäße Verfahrensführung ermöglicht es in vorteilhafter Weise, auf Veränderungen der Menge und der Zusammensetzung der schadstoffhaltigen Verbrennungsabgase sehr schnell zu reagieren, so dass immer eine ausreichend große Menge an frischem Sorptionsmittel im Reaktor vorhanden ist.

Das erfindungsgemäße Verfahren arbeitet besonders vorteilhaft, wenn die schadstoffhaltigen Verbrennungsabgase vor dem Reaktor eine Temperatur von 200 bis 280 °C haben und durch Zugabe von Wasser auf eine Temperatur von 120 bis 180 °C im Reaktor abgekühlt werden, wobei die Zugabe des Wassers im unteren Teil des Reaktors erfolgt und das Wasser in Form von Tropfen mit einem Durchmesser < 40 µm in den Reaktor eingetragen wird. Durch die Zufuhr des Wassers in fein verteilter Form in den unteren Teil des Reaktors wird die Salzbildungsreaktion der sauren gasförmigen Schadstoffe mit dem Ca(OH)₂ entscheidend beschleunigt, denn die Reaktivität des Ca(OH)₂ wird durch das Wasser aktiviert. Anschließend steht für die Adsorption des überschüssigen Wassers durch den im Sorptionsmittel enthaltenen natürlich vorkommenden Zeolith eine ausreichende Reaktionszeit zur Verfügung, so dass die hygroskopischen Eigenschaften des CaCl₂ unterdrückt werden und sich bezüglich des Betriebs der zirkulierenden Wirbelschicht nicht nachteilig auswirken können. Besonders vorteilhaft ist es, wenn die schadstoffhaltigen Verbrennungsabgase auf eine Temperatur von 130 bis 160 °C im Reaktor abgekühlt werden.

In weiterer Ausgestaltung der Erfindung ist vorgesehen, dass das in der Rückführleitung befindliche, beladene Sorptionsmittel und das frische Sorptionsmittel jeweils durch Zugabe eines Teilstroms der gereinigten Verbrennungsabgase fluidisiert und transportiert werden. Durch diese Maßnahme wird der problemlose Eintrag des Sorptionsmittels in das Verbrennungsabgas vor dem Reaktor bewirkt, ohne das hierfür nennenswerte Betriebskosten, insbesondere für ein Fluidisierungsgas, anfallen. Zur Fluidisierung und zum Transport des frischen und beladenen, rückgeführten Sorptionsmittels kann aber auch vorgewärmte Luft verwendet werden.

Zur Aufrechterhaltung der in der zirkulierenden Wirbelschicht erfindungsgemäß vorgegebenen Betriebsbedingungen ist bei einem Teillastbetrieb der Verbrennungsanlage entsprechend der Erfindung vorgesehen, dass die Betriebsbedingungen in der zirkulierenden Wirbelschicht bei Änderung der Menge der zu reinigenden Verbrennungsabgase (Teillastbetrieb) durch Zugabe eines Teilstroms der gereinigten Verbrennungsabgase konstant gehalten werden. Diese Verfahrensführung sichert einen kontinuierlichen Betrieb und vermeidet ein unerwünschtes häufiges An- und Abfahren der Reinigungsanlage.

Schließlich ist in weitere Ausgestaltung der Erfindung vorgesehen, dass die den Abscheider verlassenden, gereinigten Verbrennungsabgase entweder in die Atmosphäre entlassen, oder einem Verfahren zur Abtrennung der Oxide des Stickstoffs zugeführt werden. Die gereinigten Abgase können dann in die Atmosphäre entlassen werden, wenn der Verbrennungsprozess so geführt wurde, dass nur geringe Mengen an N₂O, NO und/oder NO₂ entstehen. Hingegen ist es erforderlich, die Oxide des Stickstoffs aus den gereinigten Verbrennungsabgasen abzutrennen, wenn sie während des Verbrennungsprozesses in größerer Menge gebildet worden sind. Die Abtrennung der Oxide des Stickstoffs kann nach bekannten Verfahren erfolgen, die dem erfindungsgemäßen Verfahren nachzuschalten sind (z.B. Entstickung durch ein SCR-Verfahren, das bei relativ niedrigen Temperaturen und mit Katalysatoren arbeitet).

Alternativ ist in weiterer Ausgestaltung der Erfindung vorgesehen, dass die schadstoffhaltigen Verbrennungsabgase unmittelbar nach dem Verlassen der Verbrennungsanlage und vor dem Eintritt in den Abgaskanal einem Verfahren zur Abtrennung der Oxide des Stickstoffs zugeführt werden, z.B. einem bekannten SNCR-Verfahren, das bei hohen Temperaturen und ohne Katalysatoren arbeitet.

Die der Erfindung zu Grunde liegende Aufgabe wird ferner durch die Schaffung einer Vorrichtung zur Durchführung des erfindungsgemäßen Verfahrens gelöst, die aus einem Reaktor, einem Abscheider und einer Rückführleitung besteht und die dadurch gekennzeichnet ist, dass der Boden des Reaktors als Venturirohr ausgeführt ist, dass unmittelbar oberhalb des Diffusors des Venturirohres über den Reaktorquerschnitt verteilt eine oder mehrere Düsen für den Eintrag des Wassers angeordnet sind, dass der Abscheider als Schlauchfilter ausgeführt ist, welches eine Niederdruck-Jet-Puls-Vorrichtung beinhaltet, dass die Rückführleitung als geneigte Fluidisierungsrinne ausgeführt ist, die in den mit dem Reaktor verbundenen Abgaskanal mündet und deren Boden ein gasdurchlässiges Gewebe aufweist, über welches das der Fluidisierung des rückgeführten Sorptionsmittels dienende Gas in die Fluidisierungsrinne eingetragen wird und dass in den Abgaskanal eine zweite geneigte Fluidisierungsrinne mündet, die der Zufuhr des frischen Sorptionsmittels dient und deren Boden ein gasdurchlässiges Gewebe aufweist, über welches das der Fluidisierung des frischen Sorptionsmittels dienende Gas in die zweite Fluidisierungsrinne eingetragen wird.

Es hat sich gezeigt, dass ein Venturirohr besonders gut zur Erzeugung der im Reaktor vorhandenen Gas-Feststoff-Suspension geeignet ist und den Transport des frischen und des rückgeführten Sorptionsmittels aus den beiden Fluidisierungsrinnen in den Reaktor begünstigt, da der Strom des schadstoffhaltigen Verbrennungsabgases die Feststoffteilchen aus den Fluidisierungsrinnen durch die Wirkung des Venturirohrs (Prinzip der Wasserstrahlpumpe) problemlos ansaugt und fördert. Das Venturirohr hat zum Diffusor einen Öffnungswinkel von 30 bis 50°, und der Diffusor erweitert sich bis auf den Querschnitt des Reaktors. Bei großen Reaktorquerschnitten können mehrere gebündelte Venturirohre in den Diffusor münden. Durch die erfindungsgemäß gewählte Anordnung der Düsen für den Eintrag des Wassers wird eine gleichmäßige und schnelle Verteilung des Wassers im unteren Teil des Reaktor bewirkt, so dass es nicht zu einem örtlichen Temperaturabfall im Reaktor kommen kann. Das als Feststoff-Abscheider dienende Schlauchfilter ermöglicht eine nahezu quantitative Abtrennung aller Feststoffteilchen, also sowohl der mit dem Verbrennungsabgas eingetragenen Staubteilchen als auch der Sorptionsmittelteilchen. Mithin ist es nicht erforderlich, mehrere verschiedene Feststoff-Abscheider zu verwenden, was sich sowohl hinsichtlich der Investitions- als auch hinsichtlich der Betriebskosten vorteilhaft auswirkt. Die Abreinigung des Schlauchfilters erfolgt erfindungsgemäß mit einer Niederdruck-Jet-Puls-Vorrichtung, wobei es nicht zu Betriebsstörungen kommt, da das abfiltrierte Feststoffgemisch nicht zusammenbackt und leicht von den Filterschläuchen abgelöst werden kann. Die Niederdruck-Jet-Puls-Vorrichtung wird nur mit einem Überdruck von 0,6 bis 0,8 bar betrieben, wodurch die nachteiligen Wirkungen des Joule-Thomson-Effekts (Abkühlung des Gases bei seiner Entspannung und teilweise Kondensations des im Gas enthaltenen Wassers) vermieden werden. Die als geneigte Fluidisierungsrinne ausgeführte Rückführleitung gewährleistet eine störungsfreie Rückführung des Teilstroms des mit Schadstoffen beladenen Sorptionsmittels, und auch das frische Sorptionsmittel wird über die zweite geneigte Fluidisierungsrinne problemlos in den Abgasstrom eingetragen.

Erfindungsgemäß wird die Niederdruck-Jet-Puls-Vorrichtung mit vorgewärmter Luft oder mit einem Teilstrom des gereinigten Verbrennungsabgases betrieben, wobei diese Gase der Abreinigung des Schlauchfilters dienen (Rückspülgas).

Nach der Erfindung hat es sich als besonders vorteilhaft erwiesen, wenn die Leitung für den Eintrag der Gas-Feststoff-Suspension in das Schlauchfilter im unteren Teil des Schlauchfilters mündet, wo mindestens ein als Prallabscheider wirkender Umlenkabscheider angeordnet ist, auf den die Gas-Feststoff-Suspension auftrifft. Hierdurch wird erreicht, dass aus der Gas-Feststoff-Suspension vor dem eigentlichen Filtrationsvorgang bereits ein großer Teil der Feststoffteilchen abgetrennt wird, was dazu führt, dass die Filterfläche verkleinert werden kann. Der Umlenkabscheider verändert die Strömungsrichtung der Gas-Feststoff-Suspension. Ferner ist in weiterer Ausgestaltung der Erfindung vorgesehen, dass das am Boden des Schlauchfilters anfallende beladene Sorptionsmittel über mindestens eine Dosierwalze abgeführt wird. Die Dosierwalze hat sich insbesondere für die Feststoffrückführung besonders gut bewährt, da sie eine schnelle Änderung der ausgetragenen Feststoffmenge ennöglicht und mithin eine dem sich ändernden Rohgasstrom angepasste, proportionale Feststoffmenge zurückführen kann. Die Dosierwalze ermöglicht bei kleiner Bauweise einen hohen Feststoffdurchsatz.

Schließlich wird die der Erfindung zu Grunde liegende Aufgabe dadurch gelöst, dass das erfindungsgemäße Verfahren sowie die erfindungsgemäße Vorrichtung zur Reinigung von Abgasen, die bei der Verbrennung von Müll, Sondermüll, Industrieabfällen und Klärschlamm anfallen, verwendet wird. Sowohl das Verfahren als auch die Vorrichtung sind nämlich bezüglich ihrer Betriebsführung so flexibel, dass ihr Betrieb den sich schnell ändernden Abgasmengen und Abgaszusammensetzungen bei der Abfallverbrennung angepasst werden kann, ohne dass die vorgegebenen Schadstoff-Grenzwerte im gereinigten Verbrennungsabgas überschritten werden.

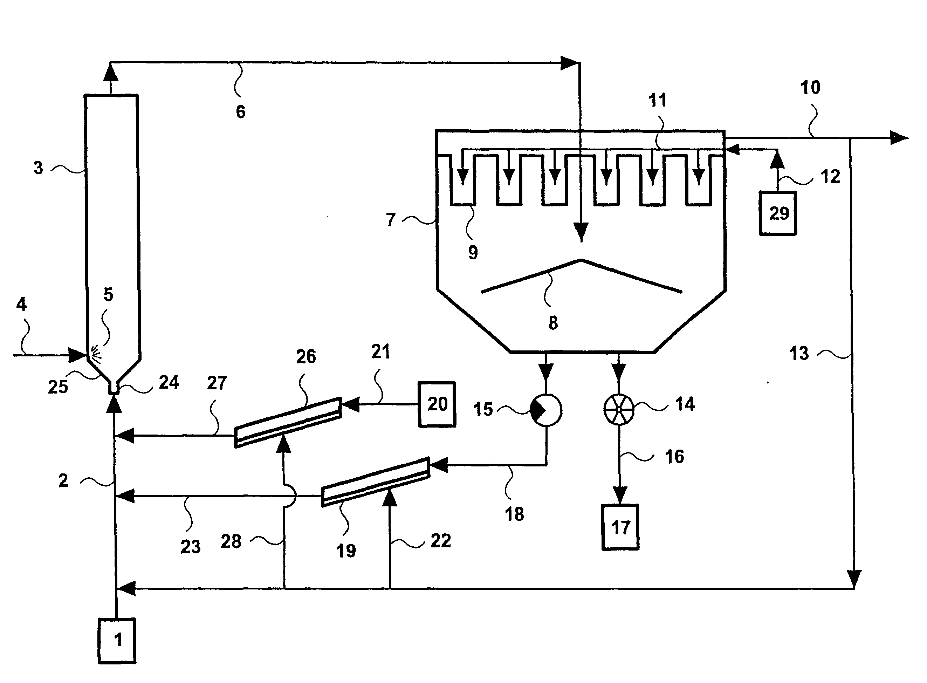

Der Gegenstand der Erfindung wird nachfolgend anhand der Zeichnung und eines Ausführungsbeispiels näher erläutert.

In der Verbrennungsanlage 1 wird Haus- und Industriemüll verbrannt, wobei ein schadstoffhaltiges Verbrennungsabgas entsteht. Dem schadstoffhaltigen Verbrennungsabgas wird die Verbrennungswärme in einem Wärmeaustauscher, der in der Zeichnung nicht dargestellt ist, soweit entzogen, dass es die Verbrennungsanlage 1 mit einer Temperatur von ca. 230 °C verlässt. Das schadstoffhaltige Verbrennungsabgas wird aus der Verbrennungsanlage 1 über den Abgaskanal 2 abgeführt und gelangt in den Reaktor 3.

Der Reaktor 3 ist als zylindrisches Rohr gestaltet, dessen Boden als Venturirohr 24 mit einem Diffusor 25 ausgeführt ist. Oberhalb des Diffusors 25 sind über den Reaktorquerschnitt je nach der Größe des Querschnitts eine oder mehrere Düsen angeordnet, über die das in der Leitung 4 geführte Wasser 5 in fein verteilter Form in den Reaktor 3 eingetragen wird. Die Wassermenge ist so bemessen, dass das schadstoffhaltige Verbrennungsabgas auf eine Temperatur von ca. 145 °C abgekühlt wird. Im Reaktor 3 hat das Gas eine Strömungsgeschwindigkeit von ca. 5 m/s. Dem Abgaskanal 2 wird das rückgeführte Sorptionsmittel über die Leitung 23 zugeführt, das in der Leitung 23 in fluidisierter Form vorliegt und von dem Strom des im Abgaskanal 2 geführten schadstoffhaltigen Verbrennungsabgases mitgerissen und über das Venturirohr 24 in den Reaktor 3 eingetragen wird. Dem Abgaskanal 2 wird das frische Sorptionsmittel über die Leitung 27 zugeführt, das in der Leitung 27 in fluidisierter Form vorliegt. Im Abgaskanal 2 werden das frische und das rückgeführte Sorptionsmittel miteinander vermischt. Es bildet sich eine Gas-Feststoff-Suspension, die im Reaktor 3 eine mittlere Suspensionsdichte von ca. 5 kg/Nm³ hat. Die Gas-Feststoff-Suspension hat im Reaktor 3 eine mittlere Verweilzeit von ca. 8 Sekunden. Während dieser Zeit werden die im Verbrennungsabgas enthaltenen Schadstoffe nahezu quantitativ durch Absorption und Adsorption an das Sorptionsmittel gebunden. Außerdem nimmt der im Sorptionsmittel enthaltene natürlich vorkommende Zeolith im Reaktor 3 einen Teil des Wassers 5 durch Adsorption auf. Als natürlich vorkommender Zeolith wird vorzugsweise ein Gemisch aus 10 bis 30 Gew.-% Mordenit und 90 bis 70 Gew.-% Klinoptilolith verwendet. Als kohlenstoffhaltige Substanz dient Herdofenkoks.

Die Gas-Feststoff-Suspension verlässt den Reaktor 3 über die Leitung 6 und wird in den unteren Teil des Schlauchfilters 7 eingebracht, wo sie zunächst auf den Umlenkabscheider 8 auftrifft. Am Umlenkabscheider 8 wird ein großer Teil der Feststoffe abgeschieden, der in den unteren Teil des Schlauchfilters 7 abfließt. Die Gas-Feststoff-Suspension trifft dann auf die Schlauchfilterelemente 9 auf, wobei die Feststoffteilchen abfiltriert und auf den Schlauchfilterelementen 9 angelagert werden; sie bilden dort einen Filterkuchen. Das von den Feststoffteilchen und den gasförmigen Schadstoffen befreite Verbrennungsabgas tritt durch die Schlauchfilterelemente 9 hindurch und gelangt in den oberen Teil des Schlauchfilters 7, der vom unteren Teil des Schlauchfilters 7 abgetrennt ist. Das gereinigte Verbrennungsabgas verlässt den oberen Reingasteil des Schlauchfilters 7 über die Leitung 10.

Im oberen Teil des Schlauchfilters 7 ist die Niederdruck-Jet-Puls-Vorrichtung 11 angeordnet, die der Abreinigung der Schlauchfilterelemente 9 dient. Bei der Niederdruck-Jet-Puls-Vorrichtung 11 handelt es sich um ein Leitungssystem, dessen Austrittsöffnungen in die Schlauchfilterelemente 9 hineinragen. Die Niederdruck-Jet-Puls-Vorrichtung 11 wird über die Leitung 12 mit vorgewärmter Luft versorgt, die im Kompressor 29 erzeugt wird und in Form eines Stoßes (Puls) auf die Innenflächen der Schlauchfilterelemente 9 so einwirkt, dass sich der auf der Außenseite der Schlauchfilterelemente 9 befindliche Filterkuchen ablöst und in den unteren Teil des Schlauchfilters 7 fällt. Der Abreinigungsvorgang wird in zeitlichen Abständen entsprechend der Erhöhung des Filterwiderstandes wiederholt, so dass das Schlauchfilter 7 kontinuierlich betrieben werden kann. Im Schlauchfilter 7 herrscht eine Temperatur von ca. 135 bis 140 °C, so dass der Taupunkt des Verbrennungsabgases nicht unterschritten werden kann. Wenn das in der Leitung 10 geführte gereinigte Verbrennungsabgas einen Staubgehalt < 3 mg/Nm³ hat, kann ein Teilstrom dieses Reingases an Stelle der vorgewärmten Luft als Rückspülgas für die Niederdruck-Jet-Puls-Vorrichtung 11 verwendet werden.

Am Boden des Schlauchfilters 7 sammelt sich der abgeschiedene Feststoff, der aus dem im Verbrennungsabgas enthaltenen Staub und dem mit Schadstoffen beladenen Sorptionsmittel besteht. Ein Teil des Feststoffs wird dem Schlauchfilter 7 über die Zellenradschleuse 14 und die Leitung 16 entnommen und gelangt in den Vorratsbunker 17. An Stelle der Zellenradschleuse 14 kann auch eine Dosierwalze verwendet werden. Der ausgeschleuste Feststoff wird als Sondermüll deponiert. Ein weiterer Teil des Feststoffs wird dem Schlauchfilter 7 über die Dosierwalze 15 entnommen und gelangt über die Leitung 18 in die Fluidisierungsrinne 19. Die Fluidisierungsrinne 19 ist geneigt angeordnet und hat einen Neigungswinkel von 10°. Über den Boden der Fluidisierungsrinne 19 wird als Fluidisierungsgas ein in der Leitung 22 geführter Teilstrom des gereinigten Verbrennungsabgases eingebracht. Dieses Fluidisierungsgas versetzt die in der Fluidisierungsrinne 19 geführten Feststoffe in einen fluidisierten, fließfähigen Zustand. Dieser Feststoff gelangt über die Leitung 23 in den Abgaskanal 2.

Das frische Sorptionsmittel tritt aus dem Vorratsbunker 20 über die Leitung 21 in die zweite Fluidisierungsrinne 26 ein, die einen Neigungswinkel von 10° hat. Über den Boden der zweiten Fluidisierungsrinne 26 wird als Fluidisierungsgas ein in der Leitung 28 geführter Teilstrom des gereinigten Verbrennungsabgases eingebracht. Das Fluidisierungsgas versetzt das frische Sorptionsmittel in einen fluidisierten, fließfähigen Zustand. Das fluidisierte, frische Sorptionsmittel gelangt über die Leitung 27 in den Abgaskanal 2, wo es sich mit dem rückgeführten Sorptionsmittel unter Bildung der Gas-Feststoff-Suspension vermischt, die in den Reaktor 3 eintritt.

Die aus dem Reaktor 3, dem Schlauchfilter 7 und den Fluidisierungsrinnen 19 und 26 bestehende Vorrichtung wird in der Weise gefahren, dass die Umlaufrate des rückgeführten Sorptionsmittels zwischen 40 und 50 liegt. Hierdurch wird erreicht, dass das im Vorratsbunker 17 gesammelte Sorptionsmittel weitgehend mit Schadstoffen beladen ist, denn mehr als 90 % des Ca(OH)₂ haben unter Salzbildung mit den sauren, gasförmigen Schadstoffen reagiert. Das in der Leitung 10 geführte gereinigte Verbrennungsabgas ist nahezu frei von Staub und gasförmigen Schadstoffen; es kann anschließend einer Entstickungsanlage zugeführt werden, in der die Abtrennung der Oxide des Stickstoffs erfolgt.

Wenn die Müllverbrennungsanlage 1 auf Teillastbetrieb heruntergefahren werden muss, wird zur Aufrechterhaltung der Betriebsbedingungen der zirkulierenden Wirbelschicht ein Teilstrom des gereinigten Verbrennungsabgases über die Leitung 13 in den Abgaskanal 2 eingebracht. Hierdurch ist es möglich, den kontinuierlichen Betrieb der zirkulierenden Wirbelschicht auch bei einem Teillastbetrieb der Müllverbrennungsanlage 1 unter optimalen fluiddynamischen Bedingungen fortzusetzen.

Das in der Zeichnung dargestellte Verfahren wurde im technischen Maßstab zur Reinigung des Abgases einer Müllverbrennungsanlage über einen längeren Zeitraum eingesetzt. Bei der Erprobung des erfindungsgemäßen Verfahrens wurden die in der Tabelle angegebenen Betriebsergebnisse während einer Betriebszeit von 1200 Stunden kontinuierlich eingehalten. Während dieser Zeit kam es nicht zu Betriebsstörungen. Insbesondere wurde während der gesamten Betriebszeit ein hinreichend gut gereinigtes Abgas sowie ein gut handhabbares Feststoffgemisch erzeugt, dessen Verbringung auf eine Deponie problemlos möglich war, zumal es kein CaSO₃ enthielt.

| 1) Schadstoffhaltiges Abgas einer Müllverbrennungsanlage | |
|---|---|
| Menge | 100 000 Nm³/h |
| Temperatur | 230 °C |
| Staub | 2000 - 10 000 mg/Nm³ |
| HF | 5 - 60 mg/Nm³ |
| HCl | 500 - 2500 mg/Nm³ |
| SO₂ | 100 - 800 mg/Nm³ |
| SO₃ | 5 - 100 mg/Nm³ |
| Hg | 0,1 - 1 mg/Nm³ |
| Cd | 0,1 - 1 mg/Nm³ |
| Dioxine, Furane ¹⁾ | - 10 ng TE/Nm^{3 3)} |
| PCB, PCP, PCA ²⁾ | 1 - 10 µg/Nm³ |
| Organischer Kohlenstoff ⁴⁾ | < 20 mg/Nm³ |

| 2) Gereinigtes Abgas einer Müllverbrennungsanlage | |
|---|---|
| Temperatur | 140°C |
| Staub | < 5 mg/Nm³ |
| HF | nicht nachweisbar |
| HCl | < 4 mg/Nm³ |
| SO₂ | < 15 mg/Nm³ |
| SO₃ | nicht nachweisbar |
| Hg | < 0,02 mg/Nm³ |
| Cd | nicht nachweisbar |
| Dioxine, Furane ¹⁾ | < 0,1 ng TE/Nm^{3 3)} |
| PCB, PCP, PCA ²⁾ | < 0,1 µg/Nm³ |
| Organischer Kohlenstoff ⁴⁾ | < 0,1 mg/Nm³ |

| | |
|---|---|
| Fußnoten: 1) Summe des Gehalts an polyhalogenierten Dibenzodioxinen und Dibenzufuranen 2) Summe des Gehalts an polychlorierten Biphenylen (PCB), polychlorierten Phenolen (PCP) und polychlorierten Aromaten (PCA) 3) TE = Toxisches Äquivalent gemäß 17. BimSchV, Anhang 4) Beinhaltet polyzyklische Kohlenwasserstoffe | |

## Patentansprüche

1. Verfahren zur Abtrennung von Staub, HF, HCl, SO₂, SO₃, Schwermetallen, Schwermetallverbindungen, polyhalogenierten Kohlenwasserstoffen und polyzyklischen Kohlenwasserstoffen aus Verbrennungsabgasen durch Behandlung der schadstoffhaltigen Verbrennungsabgase mit einem Sorptionsmittel in einer zirkulierenden Wirbelschicht, die aus einem Reaktor, einem Abscheider und einer Rückführleitung besteht, wobei die Schadstoffe im Reaktor von dem im Gasstrom suspendierten Sorptionsmittel gebunden werden, das mit den Schadstoffen beladene Sorptionsmittel im Abscheider aus der Gas-Feststoff-Suspension abgeschieden und teilweise über die Rückführleitung in den Reaktor zurückgeführt sowie teilweise ausgetragen wird,
**dadurch gekennzeichnet, daß**
als Sorptionsmittel ein Gemisch aus Ca(OH)₂, mindestens einem natürlich vorkommenden Zeolith und einer kohlenstoffhaltigen Substanz verwendet wird, wobei die mittlere Teilchengröße d₅₀ des Sorptionsmittels 2 bis 50 µm beträgt, daß die Behandlung der schadstoffhaltigen Verbrennungsabgase mit dem Sorptionsmittel bei 120 bis 180° C in Anwesenheit von Wasser/Wasserdampf erfolgt, wobei die Zugabe des Wassers im unteren Teil des Reaktors erfolgt und das Wasser in Form von Tropfen mit einem Durchmesser von < 40 µm in den Reaktor eingetragen wird, daß der Reaktor mit einer Gasgeschwindigkeit von 2 bis 10 m/s, einer mittleren Verweilzeit der Feststoffteilchen bei einmaligem Durchgang von 1 bis 10 s und einer Feststoff-Umlaufrate von 10 bis 100 betrieben wird, wobei die im Reaktor vorhandene Gas-Feststoff-Suspension eine mittlere Suspensionsdichte von 1 bis 10 kg Feststoff/Nm³ Abgas hat, daß die Abtrennung des beladenen Sorptionsmittels im Abscheider durch Filtration erfolgt, und daß das in der Rückführungsleitung befindliche, beladene Sorptionsmittel und das frische Sorptionsmittel jeweils durch Zugabe eines Teilstroms der gereinigten Verbrennungsabgase oder durch Zugabe vorgewärmter Luft fluidisiert und transportiert werden sowie, daß die Betriebsbedingungen in der zirkulierenden Wirbelschicht bei Änderung der Menge der zu reinigenden Verbrennungsabgase (Teillastbetrieb) durch Zugabe eines Teilstroms der gereinigten Verbrennungsabgase konstant gehalten werden.

2. Verfahren nach Anspruch 1, **dadurch gekennzeichnet, daß** das Sorptionsmittel aus 75 bis 96 Gewichtsteilen Ca (OH)₂ mit einem mittleren Teilchendurchmesser d₅₀ von 2 bis 5 µm, 3 bis 15 Gewichtsteilen einer kohlenstoffhaltigen Substanz mit einem mittleren Teilchendurchmesser d₅₀ von 10 bis 30 µm und 1 bis 10 Gewichtsteilen mindestens eines natürlich vorkommenden Zeoliths mit einem mittleren Teilchendurchmesser d₅₀ von 10 bis 25 µm besteht.

3. Verfahren nach den Ansprüchen 1 bis 2, **dadurch gekennzeichnet, daß** als natürlich vorkommender Zeolith Analcim, Chabasit, Klinoptilolith, Faujasit, Harmotom, Mordenit und/oder Natrolith verwendet wird.

4. Verfahren nach den Ansprüchen 1 bis 3, **dadurch gekennzeichnet, daß** als kohlenstoffhaltige Substanz Herdofenkoks oder Aktivkohle verwendet wird.

5. Verfahren nach den Ansprüchen 1 bis 4, **dadurch gekennzeichnet, daß** der natürlich vorkommende Zeolith und/oder die kohlenstoffhaltige Substanz mit 2 bis 10 Gew.-% Schwefel und/oder mindestens einer schwefelhaltigen Verbindung dotiert sind.

6. Verfahren nach den Ansprüchen 1 bis 5, **dadurch gekennzeichnet, daß** das rückgeführte, mit Schadstoffen beladene Sorptionsmittel in die schadstoffhaltigen Verbrennungsabgase vor dem Reaktor eingetragen wird.

7. Verfahren nach den Ansprüchen 1 bis 6, **dadurch gekennzeichnet, daß** das mit Schadstoffen beladene, ausgetragene Sorptionsmittel durch frisches Sorptionsmittel ersetzt wird, wobei das frische Sorptionsmittel in die schadstoffhaltigen Verbrennungsabgase vor dem Reaktor eingetragen wird und wobei das frische Sorptionsmittel sowie das rückgeführte Sorptionsmittel getrennt voneinander in die schadstoffhaltigen Verbrennungsabgase eingebracht werden.

8. Verfahren nach den Ansprüchen 1 bis 7, **dadurch gekennzeichnet, daß** die Menge des zugeführten frischen Sorptionsmittels entsprechend der Summe der Schadstoffe HCl und SO₂ und der zu ihrer Bindung stöchiometrisch erforderlichen Menge an Ca(OH)₂ geregelt wird.

9. Verfahren nach den Ansprüchen 1 bis 8, **dadurch gekennzeichnet, daß** die schadstoffhaltigen Verbrennungsabgase vor dem Reaktor eine Temperatur von 200 bis 280° C haben und durch Zugabe von Wasser auf eine Temperatur von 120 bis 180° C im Reaktor abgekühlt werden, wobei die Zugabe des Wassers im unteren Teil des Reaktors erfolgt und das Wasser in Form von Tropfen mit einem Durchmesser < 40 µm in den Reaktor eingetragen wird.

10. Verfahren nach den Ansprüchen 1 bis 9, **dadurch gekennzeichnet, daß** die Betriebsbedingungen in der zirkulierenden Wirbelschicht bei Änderung der Menge der zu reinigenden Verbrennungsabgase (Teillastbetrieb) durch Zugabe eines Teilstroms der gereinigten Verbrennungsabgase konstant gehalten werden.

11. Verfahren nach den Ansprüchen 1 bis 10, **dadurch gekennzeichnet, daß** die den Abscheider verlassenden, gereinigten Verbrennungsabgase entweder in die Atmosphäre entlassen, oder einem Verfahren zur Abtrennung der Oxide des Stickstoffs zugeführt werden.

12. Verfahren nach den Ansprüchen 1 bis 10, **dadurch gekennzeichnet, daß** die schadstoffhaltigen Verbrennungsabgase unmittelbar nach dem Verlassen der Verbrennungsanlage und vor ihrem Eintritt in den Abgaskanal einem Verfahren zur Abtrennung der Oxide des Stickstoffs zugeführt werden.

13. Vorrichtung zur Durchführung des Verfahrens nach den Ansprüchen 1 bis 11, die aus einem Reaktor, einem Abscheider und einer Rückführleitung besteht, **dadurch gekennzeichnet, daß** der Boden des Reaktors (3) als Venturirohr (24) ausgeführt ist, daß unmittelbar oberhalb des Diffusors (25) des Venturirohres (24) über den Reaktorquerschnitt verteilt eine oder mehrere Düsen für den Eintrag des Wassers (5) angeordnet sind, daß der Abscheider als Schlauchfilter (7) ausgeführt ist, welches eine Niederdruck-Jet-Puls-Vorrichtung (11) beinhaltet, welche mit einem Überdruck von 0,6 bis 0,8 bar betrieben wird, daß die Rückführleitung als geneigte Fluidisierungsrinne (19) ausgeführt ist, die in den mit dem Reaktor (3) verbundenen Abgaskanal (2) mündet und deren Boden ein gasdurchlässiges Gewebe aufweist, über welches das der Fluidisierung des rückgeführten Sorptionsmittels dienende Gas in die Fluidisierungsrinne (19) eingetragen wird und daß in den Abgaskanal (2) eine zweite geneigte Fluidisierungsrinne (26) mündet, die der Zufuhr des frischen Sorptionsmittels dient und deren Boden ein gasdurchlässiges Gewebe aufweist, über welches das der Fluidisierung des frischen Sorptionsmittels dienende Gas in die zweite Fluidisierungsrinne (26) eingetragen wird.

14. Vorrichtung nach Anspruch 13, **dadurch gekennzeichnet, daß** in der Niederdruck-Jet-Puls-Vorrichtung (11) als Rückspülgas vorgewärmte Luft oder ein Teilstrom des gereinigten Verbrennungsabgases verwendet wird.

15. Vorrichtung nach den Ansprüchen 13 bis 14, **dadurch gekennzeichnet, daß** die Leitung (6) für den Eintrag der Gas-Feststoff-Suspension in das Schlauchfilter (7) im unteren Teil des Schlauchfilters (7) mündet, wo mindestens ein als Prallabscheider wirkender Umlenkabscheider (8) angeordnet ist, auf den die Gas-Feststoff-Suspension auftrifft.

16. Vorrichtung nach den Ansprüchen 13 bis 15, **dadurch gekennzeichnet, daß** das am Boden des Schlauchfilters (7) anfallende beladene Sorptionsmittel über mindestens eine Dosierwalze (14, 15) abgeführt wird.

17. Verwendung des Verfahrens nach den Ansprüchen 1 bis 12 und der Vorrichtung nach den Ansprüchen 13 bis 16 zur Reinigung von Abgasen, die bei der Verbrennung von Müll, Sondermüll, Industrieabfällen und Klärschlamm anfallen.

## Revendications

1. Procédé pour la séparation de poussière, de HF, HCl, SO₂, SO₃, métaux lourds, composés de métaux lourds, hydrocarbures polyhalogénés et hydrocarbures polycycliques dans des gaz de combustion par traitement des gaz de combustion contenant des polluants avec un sorbant dans un lit fluidisé circulant, composé d'un réacteur, d'un séparateur et d'une conduite de retour, dans lequel les polluants sont liés au sorbant en suspension dans le flux gazeux dans le réacteur, le sorbant chargé de polluants est séparé de la suspension gaz-solides dans le séparateur puis en partie ramené dans le réacteur par la conduite de retour et en partie évacué, **caractérisé en ce que** le sorbant est un mélange de Ca(OH)₂, d'au moins une zéolithe naturelle et d'une substance carbonée, la taille de particules moyenne d₅₀ du sorbant étant de 2 à 50 µm, **en ce que** le traitement des gaz de combustion contenant des polluants avec le sorbant est réalisé entre 120°C et 180°C en présence d'eau ou de vapeur d'eau, l'apport de l'eau se faisant dans la partie inférieure du réacteur et l'eau étant introduite dans le réacteur sous la forme de gouttes d'un diamètre inférieur à 40 µm, **en ce que** le réacteur est piloté avec une vitesse de gaz de 2 à 10 m/s, un temps de séjour moyen des particules solides en un seul passage de 1 à 10 s et un taux de circulation des solides de 10 à 100, la suspension gaz-solides présente dans le réacteur ayant une densité de suspension moyenne de 1 à 10 kg de solides par Nm³ de gaz, **en ce que** la séparation du sorbant chargé dans le séparateur se fait par filtration, et **en ce que** le sorbant chargé présent dans la conduite de retour et le sorbant neuf sont fluidisés et transportés par addition d'une partie du flux de gaz de combustion purifiés ou par addition d'air préchauffé et **en ce que** les conditions de fonctionnement dans le lit fluidisé circulant sont maintenues constantes en cas de modification de la quantité de gaz de combustion à purifier (fonctionnement à charge réduite) par l'addition d'un flux partiel de gaz de combustion purifiés.

2. Procédé selon la revendication 1, **caractérisé en ce que** le sorbant se compose de 75 à 96 parts de poids de Ca(OH)₂ ayant un diamètre moyen de particules d₅₀ de 2 à 5 µm, de 3 à 15 parts de poids d'une substance carbonée ayant un diamètre moyen de particules d₅₀ de 10 à 30 µm et de 1 à 10 parts de poids d'au moins une zéolithe naturelle ayant un diamètre moyen de particules d₅₀ de 10 à 25 µm.

3. Procédé selon les revendications 1 à 2, **caractérisé en ce que** la zéolithe naturelle utilisée est de l'analcime, de la chabasite, de la clinoptilolithe, de la faujasite, de l'harmotome, de la mordénite et/ou de la natrolithe.

4. Procédé selon les revendications 1 à 3, **caractérisé en ce que** la substance carbonée utilisée est du coke de four Martin ou du charbon actif.

5. Procédé selon les revendications 1 à 4, **caractérisé en ce que** la zéolithe naturelle et/ou la substance carbonée sont dopées avec 2 à 10 % du poids de soufre et/ou d'au moins un composé soufré.

6. Procédé selon les revendications 1 à 5, **caractérisé en ce que** le sorbant chargé de polluants recyclé est introduit dans les gaz de combustion contenant les polluants en amont du réacteur.

7. Procédé selon les revendications 1 à 6, **caractérisé en ce que** le sorbant chargé de polluants évacué est remplacé par du sorbant neuf, le sorbant neuf étant introduit dans les gaz de combustion contenant les polluants en amont du réacteur et le sorbant neuf et le sorbant recyclé étant introduits séparément dans les gaz de combustion contenant les polluants.

8. Procédé selon les revendications 1 à 7, **caractérisé en ce que** la quantité de sorbant neuf amenée est régulée en fonction du total des polluants HCl et SO₂ et de la quantité stoechiométrique de Ca(OH)₂ nécessaire à leur liaison.

9. Procédé selon les revendications 1 à 8, **caractérisé en ce que** les gaz de combustion contenant les polluants ont une température de 200°C à 280°C en amont du réacteur et sont refroidis dans le réacteur par addition d'eau de 120°C à 180°C, l'addition d'eau se faisant par le bas du réacteur et l'eau étant amenée dans le réacteur sous la forme de gouttes d'un diamètre inférieur à 40 µm.

10. Procédé selon les revendications 1 à 9, **caractérisé en ce que** les conditions de fonctionnement dans le lit fluidisé circulant sont maintenues constantes en cas de modification de la quantité de gaz de combustion à purifier (fonctionnement à charge réduite) par l'addition d'un flux partiel de gaz de combustion purifiés.

11. Procédé selon les revendications 1 à 10, **caractérisé en ce que** les gaz de combustion purifiés sortant du séparateur sont soit libérés dans l'atmosphère, soit amenés vers un traitement de séparation des oxydes d'azote.

12. Procédé selon les revendications 1 à 10, **caractérisé en ce que** les gaz de combustion purifiés sont amenés, immédiatement après leur sortie de l'installation de combustion et avant leur entrée dans le canal de gaz de combustion, vers un traitement pour la séparation des oxydes d'azote.

13. Dispositif pour la mise en oeuvre du procédé selon les revendications 1 à 11, composé d'un réacteur, d'un séparateur et d'une conduite de retour, **caractérisé en ce que** le fond du réacteur (3) est conformé comme un venturi (24), **en ce qu'**il est prévu immédiatement au-dessus du diffuseur (25) du venturi (24) une ou plusieurs buses d'arrivée d'eau (5) réparties sur la section du réacteur, **en ce que** le séparateur est conçu comme un filtre à manche (7) qui contient un dispositif à jets pulsés à basse pression (11) fonctionnant sous une dépression de 0,6 à 0,8 bar, **en ce que** la conduite de retour est conformée comme une gouttière de fluidisation (19) inclinée qui débouche dans le canal d'évacuation des gaz (2) communiquant avec le réacteur (3) et dont le fond présente un tissu perméable au gaz à travers lequel le gaz servant à fluidiser le sorbant recyclé est introduit dans la gouttière de fluidisation (19), et **en ce qu'**il est prévu une deuxième gouttière de fluidisation inclinée (26) débouchant dans le canal d'évacuation des gaz (2), qui sert à amener le sorbant neuf et dont le fond présente un tissu perméable au gaz à travers lequel le gaz servant à fluidiser le sorbant neuf est introduit dans la deuxième gouttière de fluidisation inclinée (26).

14. Dispositif selon la revendication 13, **caractérisé en ce que** le gaz servant au nettoyage à contre-courant dans le dispositif à jets pulsés à basse pression (11) est de l'air préchauffé ou un flux partiel du gaz de combustion purifié.

15. Dispositif selon les revendications 13 à 14, **caractérisé en ce que** la conduite (6) amenant la suspension gaz-solides dans le filtre à manche (7) débouche dans la partie inférieure du filtre à manche (7), où est disposé au moins un séparateur-déflecteur (8) servant de séparateur par collision, auquel se heurte la suspension gaz-solides.

16. Dispositif selon les revendications 13 à 15, **caractérisé en ce que** le sorbant chargé qui se trouve au fond du filtre à manche (7) est évacué par au moins un rouleau doseur (14, 15).

17. Utilisation du procédé selon les revendications 1 à 12 et du dispositif selon les revendications 13 à 16 pour la purification de gaz de combustion produits par l'incinération de déchets, de déchets spéciaux, de déchets industriels et de boues de curage.

## Claims

1. Method for the separation of dust, HF, HCl, SO₂, SO₃, heavy metals, heavy-metal compounds, polyhalogenated hydrocarbons and polycyclic hydrocarbons from combustion flue gases by treating the pollutant-containing combustion flue gases with a sorbent in a circulating fluidised bed comprising a reactor, a separator and a return line, wherein the pollutants are bound in the reactor by the sorbent suspended in the gas stream, and the pollutant-laden sorbent is separated off from the gas/solid suspension in the separator and part is returned to the reactor via the return line and part is discharged, **characterised in that** the sorbent used is a mixture of Ca(OH)₂, at least one naturally occurring zeolite and a carbon-containing substance, the mean particle size d₅₀ of the sorbent being 2 to 50 *µ*m, **in that** the treatment of the pollutant-containing combustion flue gases with the sorbent is carried out at 120 to 180°C in the presence of water/steam, wherein the addition of water takes place in the lower part of the reactor and the water is introduced into the reactor in the form of drops with a diameter of < 40 *µ*m, **in that** the reactor is operated at a gas velocity of 2 to 10 m/s, a mean residence time of the solids particles in the case of a single pass of 1 to 10 s and a solids circulation rate of 10 to 100, wherein the gas/solid suspension present in the reactor has a mean suspension density of 1 to 10 kg of solid/Nm³ of flue gas, **in that** the separation of the laden sorbent in the separator is carried out by filtration, and **in that** the loaded sorbent located in the return line and the fresh sorbent are each fluidised and transported by addition of a part-stream of the cleaned combustion flue gases or by addition of pre-warmed air, and also **in that** the operating conditions in the circulating fluidised bed are kept constant in the event of a change in the amount of combustion flue gases to be cleaned (partial load operation) by addition of a part-stream of the cleaned combustion flue gases.

2. Method as claimed in Claim 1, **characterised in that** the sorbent comprises 75 to 96 parts by weight of Ca(OH)₂ with a mean particle diameter d₅₀ of 2 to 5 *µ*m, 3 to 15 parts by weight of a carbon-containing substance with a mean particle diameter d₅₀ of 10 to 30 *µ*m and 1 to 10 parts by weight of at least one naturally occurring zeolite with a mean particle diameter d₅₀ of 10 to 25 *µ*m.

3. Method as claimed in Claims 1 and 2, **characterised in that** the naturally occurring zeolite used is analcime, chabasite, clinoptilolite, faujasite, harmotome, mordenite and/or natrolite.

4. Method as claimed in Claims 1 to 3, **characterised in that** the carbon-containing substance used is open hearth furnace coke or activated carbon.

5. Method as claimed in Claims 1 to 4, **characterised in that** the naturally occurring zeolite and/or the carbon-containing substance are doped with 2 to 10% by weight of sulphur and/or at least one sulphur-containing compound.

6. Method as claimed in Claims 1 to 5, **characterised in that** the recycled pollutant-laden sorbent is introduced into the pollutant-containing combustion flue gases upstream of the reactor.

7. Method as claimed in Claims 1 to 6, **characterised in that** the pollutant-laden discharged sorbent is replaced by fresh sorbent, wherein the fresh sorbent is introduced into the pollutant-containing combustion flue gases upstream of the reactor, and wherein the fresh sorbent as well as the recycled sorbent are introduced separately from one another into the pollutant-containing combustion flue gases.

8. Method as claimed in Claims 1 to 7, **characterised in that** the amount of fresh sorbent supplied is regulated according to the sum of the pollutants HCl and SO₂ and the amount of Ca(OH)₂ which is stoichiometrically necessary for binding thereof.

9. Method as claimed in Claims 1 to 8, **characterised in that** the pollutant-containing combustion flue gases have a temperature of 200 to 280°C upstream of the reactor and are cooled to a temperature of 120 to 180°C in the reactor by addition of water, wherein the addition of water takes place in the lower part of the reactor and the water is introduced into the reactor in the form of drops with a diameter of < 40 *µ*m.

10. Method as claimed in Claims 1 to 9, **characterised in that** the operating conditions in the circulating fluidised bed are kept constant in the event of a change in the amount of combustion flue gases to be cleaned (partial-load operation) by addition of a part-stream of the cleaned combustion flue gases.

11. Method as claimed in Claims 1 to 10, **characterised in that** the cleaned combustion flue gases leaving the separator are either released into the atmosphere or are fed to a method for separation out of the oxides of nitrogen.

12. Method as claimed in Claims 1 to 10, **characterised in that** the pollutant-containing combustion flue gases are fed to a method for separation out of the oxides of nitrogen immediately after leaving the incinerator and before entering the flue gas duct.

13. Apparatus for carrying out the method as claimed in Claims 1 to 11, comprising a reactor, a separator and a return line, **characterised in that** the base of the reactor (3) is designed as a Venturi tube (24), **in that** one or more nozzles for the introduction of the water (5) are disposed immediately above the diffuser (25) of the Venturi tube (24) and distributed over the reactor cross-section, **in that** the separator is designed as a bag filter (7) containing a low-pressure jet pulse device (11) which is operated at an excess pressure of 0.6 to 0.8 bar, **in that** the return line is designed as an inclined fluidisation channel (19) which opens into the flue gas duct (2) connected to the reactor (3) and of which the base has a gas-permeable fabric through which the gas serving for fluidisation of the recycled sorbent is introduced into the fluidisation channel (19), and **in that** a second inclined fluidisation channel (26), which serves for feeding the fresh sorbent and of which the base has a gas-permeable fabric through which the gas serving for fluidisation of the fresh sorbent is introduced into the second fluidisation channel (26), is introduced into the flue gas channel (2).

14. Apparatus as claimed in Claim 13, **characterised in that** the back-flushing gas used in the low-pressure jet pulse device (11) is pre-warmed air or a part-stream of the cleaned combustion flue gas.

15. Method as claimed in Claims 13 to 14, **characterised in that** the line (6) for the introduction of the gas/solid suspension into the bag filter (7) opens into the lower part of the bag filter (7), where there is disposed at least one inertial separator (8) acting as a baffle-plate separator which the gas/solid suspension strikes.

16. Apparatus as claimed in Claims 13 to 15, **characterised in that** the loaded sorbent accumulating at the base of the bag filter (7) is discharged via at least one metering roller (14, 15).

17. Use of the method as claimed in Claims 1 to 12 and the apparatus as claimed in Claims 13 to 16 for cleaning flue gases occurring during the combustion of refuse, hazardous waste, industrial waste and sewage sludge.
